# EUROPÄISCHE PATENTANMELDUNG

(11) **EP 2 853 717 A1**
(43) Veröffentlichungstag der Anmeldung: **01.04.2015**
(21) Anmeldenummer: 13185954.8
(22) Anmeldetag: 25.09.2013
(51) Int. Cl.: F02C 3/34, F02C 6/08, F02C 7/04, F02C 9/18

(54) **Gasturbine für einen CO-konformen Teillastbetrieb**

(71) Anmelder: Siemens Aktiengesellschaft, 80333 München (DE)
(72) Erfinder: Savilius, Nicolas, 45359 Essen (DE)

(57) **Zusammenfassung**

Die Erfindung betrifft eine Gasturbine (100) mit einem Verdichter (1), welcher wenigstens eine zur Ansaugluft (10) gerichtete Luftentnahmeöffnung (11) in einem zweiten Bereich (22) aufweist, der bei einem regulären Betrieb der Gasturbine (100) komprimierte Ansaugluft (10) bei einem zweiten Druck (P2) aufweist, und welche Gasturbine (100) eine stromaufwärts von der Luftentnahmeöffnung (11) in Bezug auf den Strom der Ansaugluft (10) angeordnete und zur Ansaugluft (10) gerichtete Luftabgabeöffnung (12) aufweist, die in einem ersten Bereich (21) vorgesehen ist, welcher bei einem regulären Betrieb der Gasturbine (100) Ansaugluft (10) bei einem ersten Druck (P1) aufweist, wobei der erste Druck (P1) kleiner als der zweite Druck (P2) ist.

## Beschreibung

Die vorliegende Erfindung betrifft eine Gasturbine, die einen Ansaugluftzirkulationsbetrieb erlaubt, um eine CO-konforme Fahrweise bei Teillastbetrieb zu ermöglichen. Weiterhin betrifft die vorliegende Erfindung ein Verfahren zum Betrieb einer solchen Gasturbine.

Gasturbinen sind allgemein Verbrennungskraftmaschinen, welche einen Verdichter aufweisen, der einer Brennkammer strömungstechnisch vorgeschaltet ist. Um die Brennkammer mit ausreichender komprimierter Ansaugluft versorgen zu können, weist der Verdichter eine oder mehrere Verdicherstufen auf, welche die Ansaugluft zunehmend komprimieren. Die so komprimierte Ansaugluft wird in der Brennkammer mit einem gasförmigen bzw. flüssigen Brennstoff verbrannt und in einer strömungstechnisch nachgeschalteten Entspannungsturbine expandiert. Bei dieser Expansion des aus der Verbrennung stammenden Heißgases wird thermische in mechanische Energie umgesetzt, die ermöglicht, einen Gasturbinenläufer drehmechanisch anzutreiben. Die dabei frei werdende mechanische Energie dient typischerweise ebenso zum Antrieb der Verdichterstufen in dem Verdichter. Die in mechanische Energie umsetzbare thermische Energie hängt hierbei maßgeblich von der Verbrennungstemperatur in der Brennkammer ab. Arbeitet eine Gasturbine unterhalb der Verbrennungstemperatur zur Erreichung des Vollastbetriebs, ist im Normalfall auch die sogenannte Primärzonentemperatur (TPZ) entsprechend vermindert. Unterschreitet nun diese Primärzonentemperatur einen Schwellenwert zur Erzeugung von CO nehmen die CO-Emissionen verstärkt zu. Die Zunahme an CO-Emissionen kann hierbei jedoch derart stark zunehmen, dass auch gesetzliche CO-Emissionsgrenzwerte überschritten werden. Bei Überschreiten dieser Grenzwerte kann der Betreiber der Gasturbine folglich die Gasturbine nicht weiter in einem noch geringeren Teillastbetrieb betreiben, so dass er folglich gezwungen wäre, seine Gasturbine abzuschalten, wollte er dies tun. Mit anderen Worten ist also eine weitere Leistungsreduzierung der Gasturbine ohne gleichzeitiges Überschreiten der CO-Emissionsgrenzwerte nicht möglich.

Es stellt sich vorliegend also als technisches Erfordernis dar, eine Gasturbine bzw. eine geeignete Fahrweise einer solchen Gasturbine vorzuschlagen, die eine weitergehende Leistungsreduzierung ermöglicht, ohne die Menge an CO-Emissionen zu erhöhen. Insbesondere soll die Gasturbine bzw. das Verfahren zum Betrieb der Gasturbine bei einem hinsichtlich der Leistungsabgabe mit einem herkömmlichen Teillastbetrieb vergleichbaren Betriebsverfahren eine geringere CO-Emissionsmenge liefern.

Diese der Erfindung zugrundeliegenden Aufgaben werden gelöst durch eine Gasturbine gemäß Anspruch 1 sowie ein Verfahren zum Betrieb einer solchen Gasturbine gemäß Anspruch 11.

Diese der Erfindung zugrundeliegenden Aufgaben werden insbesondere gelöst durch eine Gasturbine mit einem Verdichter, welcher wenigstens eine zur Ansaugluft gerichtete Luftentnahmeöffnung in einem zweiten Bereich aufweist, der bei einem regulären Betrieb der Gasturbine komprimierte Ansaugluft bei einem zweiten Druck aufweist, und welche Gasturbine eine stromaufwärts von der Luftentnahmeöffnung in Bezug auf den Strom der Ansaugluft angeordnete und ebenfalls zur Ansaugluft gerichtete Luftabgabeöffnung aufweist, die in einem ersten Bereich vorgesehen ist, welcher bei einem regulären Betrieb der Gasturbine Ansaugluft bei einem ersten Druck aufweist, wobei der erste Druck kleiner als der zweite Druck ist.

Weiterhin wird die der Erfindung zugrundeliegende Aufgabe gelöst durch ein Verfahren zum Betrieb einer solchen vorab, wie auch nachfolgend beschriebenen Gasturbine, wobei das Verfahren folgende Schritte umfasst:
- Betreiben der Gasturbine in Teillast;
- Entnehmen von komprimierter Ansaugluft aus dem Verdichter durch die erste Luftentnahmeöffnung;
- Leiten der entnommenen Ansaugluft von der Luftentnahmeöffnung zu der Luftabgabeöffnung;
- Abgeben von Ansaugluft aus der Luftabgabeöffnung an die von dem Verdichter angesaugte Luft.

Hierbei ist darauf hinzuweisen, dass ein regulärer Betrieb einer Gasturbine alle Formen des stromerzeugenden Betriebs betreffen kann, darunter insbesondere einen Nennlastbetrieb, einen Volllastbetrieb, einen Überlastbetrieb sowie auch einen Teillastbetrieb umfassen soll. Besonders bevorzugt ist hierbei jedoch ein Teillastbetrieb. Die Definition eines regulären Betriebs dient vorliegend aber nur der Veranschaulichung der unterschiedlichen Druckverhältnisse in dem ersten und zweiten Bereich. Vor allem soll damit aber nicht zum Ausdruck gebracht werden, dass das erfindungsgemäße Verfahren bei allen von einem regulären Betrieb umfassten Betriebsformen angewendet werden könnte.

Die Ansaugluft betrifft die von einer Gasturbine bei Betrieb angesogene Umgebungsluft, welche vor allem bereits von Bauteilen der Gasturbine oder einem Ansauggehäuseteil der Gasturbine umgeben ist. Insbesondere sind derartige Bauteile durch den Verdichter oder das Verdichtereintrittsgehäuse umfasst.

Weiterhin soll darauf hingewiesen werden, dass der erste, wie auch der zweite Druck jeweils statische Drücke sein sollen. Da die statischen Drücke maßgeblich das Strömungsverhalten bei der Entnahme von Ansaugluft mittels der Luftentnahmeöffnung bzw. Abgabe von entnommener Ansaugluft (= Entnahmeluft) mittels der Luftabgabeöffnung beeinflussen, sollen die vorliegenden Drücke also maßgeblich hinsichtlich ihrer statischen Druckkomponenten betrachtet werden.

Erfindungsgemäß kann beim Betrieb der Gasturbine in einem zweiten Bereich mittels der Luftentnahmeöffnung Ansaugluft bei einem zweiten Druck entnommen werden. Dieser zweite Druck ist entsprechend höher als ein erster Druck, welcher im ersten Bereich vorherrscht, so dass durch das Druckgefälle zwischen beiden Drücken die Entnahmeluft der Luftabgabeöffnung zugeleitet werden kann, aus welcher diese wieder an neue, in die Gasturbine eingesaugte Ansaugluft abgegeben werden kann. Es stellt sich somit ein Zirkulationsbetrieb ein, welcher Teile der Ansaugluft an einem zweiten Ort entnimmt und diese der Ansaugluft erneut beimischt, jedoch an einem weiter stromaufwärts liegenden ersten Ort. Dadurch ist es möglich, den Verdichtermassenstrom, also den Massenstrom, der am Ende des Verdichters der Brennkammer zugeleitet wird, abzusenken. Wird die Menge an in der Brennkammer verbrannten Brennstoffs nicht verändert, ergibt sich eine fettere Verbrennung und damit eine höhere Primärzonentemperatur bzw. Verbrennungstemperatur. Die erhöhte Primärzonentemperatur führt zu einer Verminderung der Ausbildung von Kohlenmonoxid (CO), wodurch die aus der Gasturbine abgeleiteten Abgase eine geringere CO-Menge aufweisen können. Aufgrund der unveränderten Menge an verbranntem Brennstoff bleibt jedoch die Leistungsausbeute im Wesentlichen unverändert bzw. wird nur geringfügig verringert.

Der erfindungsgemäß bei Betrieb der Gasturbine eingestellte Zirkulationsbetrieb bewirkt aufgrund von unterschiedlichen physikalischen Mechanismen eine Absenkung des Verdichtermassenstroms. Zunächst führt die Entnahme von Ansaugluft mittels der Luftentnahmeöffnung bereits zu einer Minderung des in diesem zweiten Bereich vorherrschenden Massenstroms. Da die Entnahme von Ansaugluft in dem Verdichter erfolgt, ist die so entnommene Ansaugluft aufgrund der Luftkomprimierung schon teilweise quasiadiabatisch erwärmt. Wird nun diese erwärmte Ansaugluft der stromaufwärts eingesogenen Ansaugluft bei einem geringeren Druck zugemischt, stellt sich eine Verringerung der mittleren Dichte der vermischten Ansaugluft ein, wodurch auch der in den Verdichter eingeführte Massenstrom verringert wird. Aufgrund der nachfolgenden erneuten Verdichtung dieser vermischten Ansaugluft verstärkt sich der thermische Dichteverminderungseffekt zunehmend, bis sich etwa ein Gleichgewichtszustand einstellt. Demgemäß kann also der in den Verdichter eintretende Massenstrom verringert werden und folglich auch der Verdichterendmassenstrom, welcher der Brennkammer zugeleitet wird.

Wie weiter nachfolgend noch im Detail erklärt werden wird, bedarf die erfindungsgemäße Gasturbine nur verhältnismäßig weniger baulicher Änderungen im Vergleich zu herkömmlichen Gasturbinen, so dass auch nach nur wenigen Modifikationen ein CO-emissionsarmer Teillastbetrieb möglich ist.

Gemäß einer ersten besonders bevorzugten Ausführungsform der Erfindung ist vorgesehen, dass die Luftabgabeöffnung am Verdichtereintrittsgehäuse vorgesehen ist. Das Verdichtereintrittsgehäuse betrifft vor allem diejenigen Bauteile der Gasturbine, welche den Strom der Ansaugluft umschließen und hinsichtlich des Ansaugluftstroms stromaufwärts im Bezug auf den Verdichter angeordnet sind. Das Verdichtereintrittsgehäuse ist folglich dem Verdichter vorgeschaltet, und weist anders als der Verdichter keine Beschaufelung auf. Damit ist die in dem Verdichtereintrittsgehäuse befindliche Ansaugluft noch nicht durch Komprimierung quasiadiabatisch erwärmt, so dass die Abgabe von erwärmter Entnahmeluft aus der Luftabgabeöffnung zur Mischung mit noch nicht erwärmter Ansaugluft eine deutliche Dichteverminderung aufgrund der Mischung erlaubt. Die Ansaugluftmischung in diesem Bereich erlaubt folglich eine besonders effiziente Verminderung des Verdichtermassenstroms, welcher aus dem Verdichter der Brennkammer zugeleitet wird.

Gemäß einer weiteren bevorzugten Ausführungsform der Erfindung ist vorgesehen, dass die Luftentnahmeöffnung und die Luftabgabeöffnung durch wenigstens eine Leitung fluidtechnisch verbunden sind, die ein Stellmittel aufweist. Insbesondere ist das Stellmittel schaltbar, bzw. steuerbar und/oder regelbar. Die Schaltung, Steuerung und/oder Regelung erfolgt insbesondere abhängig in Bezug auf die Abgastemperatur bzw. weitere Betriebsparameter, die von der Primärzonentemperatur eine funktionelle Abhängigkeit aufweisen. Bevorzugt können auch Luftentnahmeöffnung und Luftabgabeöffnung über eine Mehrzahl an Leitungen fluidtechnisch verbunden sein, welche insbesondere mindestens ein Stellmittel aufweisen. Durch Vorsehen der Stellmittel kann wenigstens eine fluidtechnische Unterbrechung ermöglicht werden, so dass bei Betriebsweisen, die keinen Zirkulationsbetrieb der Ansaugluft erfordern, wie beispielsweise bei Volllastbetrieb, ein Zirkulationsbetrieb der Ansaugluft verhindert werden kann. Durch geeignete Steuerung und/oder Regelung kann auch die Menge an Entnahmeluft, welche von der Luftentnahmeöffnung an die Luftabgabeöffnung geleitet wird, entsprechend den Lastbedingungen der Gasturbine geeignet eingestellt werden. Bevorzugt wird hierbei vermehrt Entnahmeluft an die Luftabgabeöffnung geleitet, je geringer die Last bei Teillastbetrieb ist. Demgemäß kann die bei Teillastbetrieb aus der Gasturbine ausgestoßene Menge an CO lastabhängig vorteilhaft eingestellt werden.

Entsprechend einer Weiterführung dieses Aspekts ist vorgesehen, dass das Stellmittel mit einer Steuer- bzw. Regeleinheit in Wirkverbindung steht, wobei die Steuer- bzw. Regeleinheit derart ausgebildet ist, dass im Teillastbetrieb der Gasturbine das Stellmittel von einer Schließstellung in eine geöffnete Stellung überführt wird, insbesondere dann, wenn der Teillastbetrieb Betriebsparameter aufweist, die eine CO-Emission anzeigen, die über einem vorbestimmten Grenzwert liegt. Derartige Betriebsparameter können hierbei insbesondere Messwerte sein, welche Rückschlüsse auf die Menge an von der Gasturbine abgegebenem CO erlauben. Eine solche messtechnische Erfassung umfasst hierbei auch eine entsprechende Auswertung, also etwa beispielsweise einen automatisierten Vergleich mit Richtwerten von Grenzwerten. Das Vorliegen eines solchen Vergleichs kann also entsprechend ein Über- oder ein Unterschreiten des Grenzwertes für CO-Emissionen anzeigen. Ausführungsgemäß wird ein Zirkulationsbetrieb der Ansaugluft insbesondere dann realisiert, wenn ein entsprechendes Entscheidungskriterium vorliegt. Dieses Entscheidungskriterium ist insbesondere in der Steuer- bzw. Regeleinheit hinterlegt und betrifft, wie oben ausgeführt, vor allem die Menge an aus der Gasturbine abgeleitetem CO.

Gemäß einer weiteren vorteilhaften Ausführungsform der Erfindung ist vorgesehen, dass die Luftabgabeöffnung durch eine Vielzahl an im Verdichtereintrittsgehäuse bzw. in dem Verdichter radial angebrachten Öffnungen ausgebildet ist. Die einzelnen Öffnungen können hierbei zudem auch noch eine geeignete Ausrichtung aufweisen, welche insbesondere erlauben, die aus der Luftabgabeöffnung abgegebene Entnahmeluft, der zur Vermischung vorgesehenen Ansaugluft in einem bestimmten Winkel, insbesondere ungleich 90 Grad, zu deren Strömungsrichtung zuzuleiten. Dadurch kann insbesondere eine verbesserte turbulente Mischung der beiden Fluide erfolgen, und somit ein schnellerer Temperaturausgleich in dem Mischungsbereich erreicht werden. Ausführungsgemäß ist es auch möglich, dass die Luftabgabeöffnung eine Vielzahl an in Strömungsrichtung der zu vermischenden Ansaugluft angeordneten Öffnungen aufweist. Dementsprechend kann auch eine besonders effiziente Fluidmischung über einen verhältnismäßig größeren Bereich erreicht werden.

Entsprechend einer weiteren bevorzugten Ausführungsform ist vorgesehen, dass die Luftabgabeöffnung eine Anstellung in Bezug auf die Richtung des Stroms der Ansaugluft im ersten Bereich aufweist, insbesondere eine Anstellung derart, dass die abgegebene Luft bereits einen Geschwindigkeitsanteil aufweist, der in Richtung des Ansaugluftstroms im ersten Bereich weist. Die Anstellung der Luftabgabeöffnung weist also einen axialen Anteil auf, welcher in Richtung der Längserstreckungsrichtung des Gasturbinenläufers verläuft. Diese Anstellung erlaubt, bereits einen Teil der kinetischen Energie des Ansaugluftstroms durch die vorteilhafte Anstellung bereits zu stellen, so dass hier etwa verringerte Strömungsturbulenzen auftreten. Ebenfalls kann die Anstellung aber auch jede andere Richtung aufweisen, insbesondere entgegen der Strömungsrichtung des Ansaugluftstroms, so dass durch eine Erhöhung der lokalen Turbulenzen eine verbesserte Mischung die Folge ist.

Gemäß einer weiteren vorteilhaften Ausführungsform der Erfindung ist vorgesehen, dass die Luftentnahmeöffnung im Verdichter als eine im Wesentlichen radial verlaufende Öffnung ausgebildet ist, die insbesondere bei radialem Verlauf nicht unterbrochen ist. Der radiale Verlauf betrifft hierbei den geometrischen Verlauf um den Gasturbinenläufer. Aufgrund dieser Geometrie kann eine weitgehend gleichmäßige und strömungstechnisch kaum turbulente Luftentnahme erfolgen, wodurch die Strömungsverhältnisse im Verdichter gut kontrollierbar bleiben.

Entsprechend einer weiteren bevorzugten Ausführungsform ist vorgesehen, dass die Luftentnahmeöffnung eine Anstellung in Bezug auf die Richtung des Stroms der Ansaugluft im zweiten Bereich aufweist, insbesondere eine Anstellung derart, dass die entnommene Luft bereits einen Geschwindigkeitsanteil aufweist, der in Richtung des Ansaugluftstroms im zweiten Bereich weist. Diese Anstellung erlaubt, bereits einen Teil der kinetischen Energie des Ansaugluftstroms durch die vorteilhafte Anstellung aufzunehmen, um so etwa eine definierte Strömungsbildung in der Luftentnahmeöffnung zu fördern. Ebenfalls kann die Anstellung aber auch jede andere Richtung aufweisen. Durch eine geeignete Anstellung kann so auch die Bildung von Turbulenzen im Ansaugluftstrom vorteilhaft vermindert werden.

Gemäß einer weiteren Ausführungsform der Erfindung ist vorgesehen, dass die Gasturbine weiterhin ein Entnahmeplenum aufweist, welches der Luftentnahmeöffnung strömungstechnisch in Bezug auf den entnommenen Luftstrom (Strom der Entnahmeluft) nachgeschaltet ist. Luftentnahmeöffnung und Entnahmeplenum können weitgehend von einer Baueinheit umfasst sein. Hierbei wird die aus dem Verdichter entnommene Ansaugluft durch die Luftentnahmeöffnung geführt und im Entnahmeplenum vorgehalten. Durch die Vorhaltung ergibt sich zum einen eine drucktechnische Äquilibrierung und kann damit geringe Druckschwankungen ausgleichen. Gleichzeitig erlaubt das Entnahmeplenum auch den variablen Zirkulationsbetrieb, ohne den Verdichterbetrieb unvorteilhaft zu beeinflussen. So können nämlich aus dem Entnahmeplenum zeitlich variierende Mengen an Ansaugluft entnommen werden, ohne dass dies etwa zu ungewünschten Strömungsturbulenzen bei der Verdichterluft in dem Verdichter führen würde.

Gemäß einer weiteren besonders bevorzugten Ausführungsform der Erfindung kann auch vorgesehen sein, dass die Gasturbine ein Abgabeplenum aufweist, welches der Luftabgabeöffnung strömungstechnisch in Bezug auf den Strom der Entnahmeluft vorgeschaltet ist. Vergleichbar zur Luftentnahmeöffnung kann auch hier die Luftabgabeöffnung mit dem Abgabeplenum von einer Baueinheit umfasst sein. So erlaubt auch das Abgabeplenum eine fluidtechnische Äquilibrierung des in die noch nicht vermischte Ausaugluft eingeführten, erwärmten Entnahmeluftstroms als auch den Vorhalt größerer Mengen an Entnahmeluft.

Entsprechend einer besonders bevorzugten Ausführungsform und Weiterführung des erfindungsgemäßen Verfahrens ist vorgesehen, dass die Menge der von der Luftentnahmeöffnung an die Luftabgabeöffnung geleiteten Entnahmeluft durch ein Stellmittel eingestellt werden kann, wobei das Stellmittel in Abhängigkeit eines Betriebsparameters, insbesondere der Abgastemperatur eingestellt wird. Vorzugsweise können, wie weiter oben auch ausgeführt, auch andere Betriebsparameter als Grundlade zur Einstellung des Stellmittels dienen. Besonders bevorzugt sind hierbei Temperaturwerte, die etwa ein Maß für die Primärzonentemperatur sind, also der Verbrennungstemperatur bei Betrieb der Gasturbine in der Brennkammer. Solche Betriebsparameter sind insbesondere, wie weiter oben schon ausgeführt, Messwerte.

Nachfolgend soll die Erfindung anhand von einzelnen Figuren im Detail näher beschrieben werden. Hierbei ist darauf hinzuweisen, dass die Figuren lediglich schematisch zu verstehen sind und keinerlei Einschränkung hinsichtlich der Ausführbarkeit der Erfindung darstellen.

Weiter sei darauf hingewiesen, dass alle technischen Merkmale mit gleichen Bezugszeichen gleiche technische Wirkungen aufweisen.

An dieser Stelle sei auch vermerkt, dass die in den Figuren gezeigten technischen Merkmale in beliebiger Kombination mit weiteren in der Erfindung dargestellten technischen Merkmalen beansprucht werden, soweit die Kombination die der Erfindung zugrundeliegende Aufgabe lösen kann.

Hierbei zeigen:
- FIG 1: eine schematische Darstellung einer ersten Ausführungsform der erfindungsgemäßen Gasturbine 100 in seitlicher Schnittansicht;
- FIG 2: eine flussdiagrammatische Darstellung einer ersten Ausführungsform des erfindungsgemäßen Verfahrens zum Betrieb einer solchen Gasturbine 100;

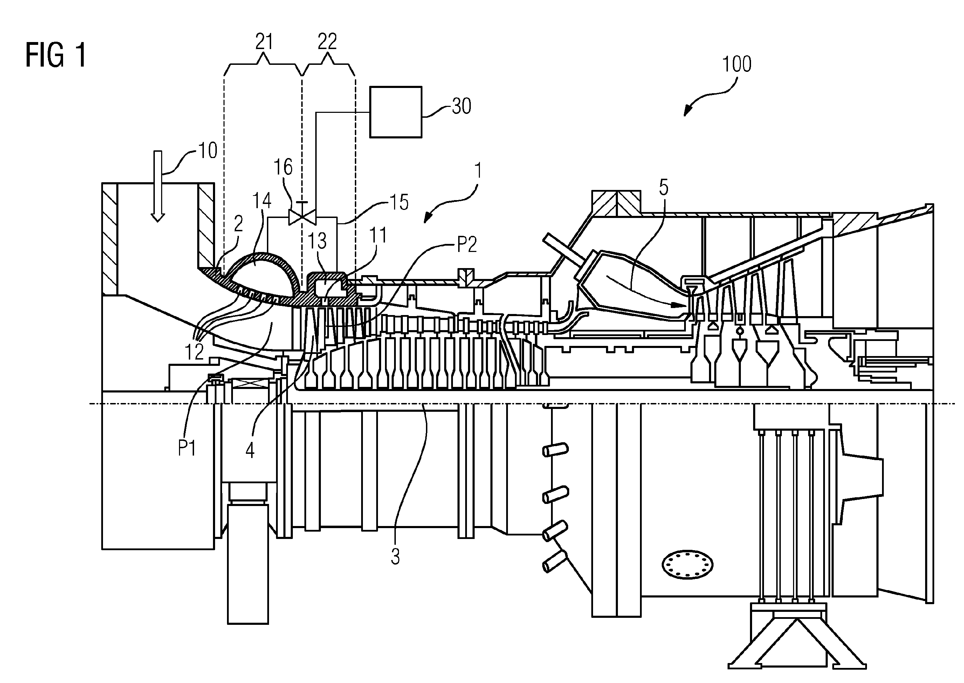

FIG 1 zeigt eine seitliche Schnittansicht durch eine Ausführungsform der erfindungsgemäßen Gasturbine 100, welche neben einem Verdichter 1 auch ein Verdichtereintrittsgehäuse 2 aufweist, welches dem Verdichter 1 strömungstechnisch vorgeschaltet ist. Der Verdichter 1 umgibt den Gasturbinenläufer 3, welcher reihenweise Laufschaufeln 4 hat, die unterschiedlichen Verdichterstufen zugeordnet werden können. Bei Betrieb der Gasturbine 100 wird Ansaugluft 10 über das Verdichtereintrittsgehäuse 2 dem Verdichter 1 zugeführt. Hierbei wird in einem zweiten Bereich 22 über eine Luftentnahmeöffnung 11 komprimierte Ansaugluft 10 bei einem zweiten Druck P2 entnommen. Die entnommene Ansaugluft 10 wird einem Entnahmeplenum 13 zugeführt, über welches die Ansaugluft 10 mittels einer Leitung 15 einem Abgabeplenum 14 zugeleitet wird, welches in Bezug auf die Strömungsrichtung der angesaugten Ansaugluft 10 stromaufwärts angeordnet ist. In einem ersten Bereich 21 befindet sich eine Luftabgabeöffnung 12, die mit dem Abgabeplenum 14 derart fluidtechnisch verbunden ist, dass eine Wandung des Abgabeplenums 14 die Luftabgabeöffnung 12 umfasst. Ausführungsgemäß sind vorliegend insgesamt vier Luftabgabeöffnungen 12 dargestellt, welche in Bezug auf den Gasturbinenläufer 3 in radialer Richtung im ersten Bereich 21 angeordnet sind.

Der erste Bereich 21 ist hierbei vom Verdichtereintrittsgehäuse 2 umfasst. Der Ansaugluftdruck im Ansaugluftkanal des Bereichs 21 beträgt P1, wobei der Druck P1 geringer ist als ein Druck P2, welcher im zweiten Bereich 22, also nahe der Luftentnahmeöffnung 11 vorherrscht. Insofern kann über die Luftentnahmeöffnung 11 Ansaugluft 10 entnommen werden, und aufgrund des Druckgefälles der neuen, noch nicht vermischten Ansaugluft 10 im Ansaugluftkanal des ersten Bereichs 21 zugeleitet werden.

Wird die Gasturbine 100 in Teillast betrieben, kann nun gezielt Ansaugluft die mittels der Luftentnahmeöffnung 11 entnommen wurde, dem Ansaugluftstrom im ersten Bereich 21 zugeführt. Hierbei kommt es, wie weiter oben im Detail beschrieben, zu einer Dichteverminderung des Ansaugluftstroms im ersten Bereich 21, und folglich zu einer Verminderung des gesamten Verdichtermassenstroms. Insbesondere der Verdichterendmassenstrom, also der Massenstrom, welcher der Brennkammer 5 zugeleitet wird, kann dabei vermindert werden. Bei unveränderter Menge an in der Brennkammer 5 verbranntem Brennstoff und dem geringeren Verdichtermassenstrom, kommt es zu einer fetteren Verbrennung, wodurch die Verbrennungstemperatur verhältnismäßig ansteigt und im Verhältnis weniger CO-Anteile gebildet werden.

Um die Menge an mittels der Luftentnahmeöffnung 11 entnommener Ansaugluft 10 und an die Luftabgabeöffnung 12 weitergeleitete Entnahmeluft einzustellen, ist in der Leitung 15 ein Stellmittel 16, insbesondere ein Schaltventil, ein Regelventil bzw. Steuerventil vorgesehen, welches erlaubt, den Fluidstrom zwischen dem Entnahmeplenum 13 und dem Abgabeplenum 14 geeignet einzustellen. Gemäß einer bevorzugten Fahrweise der Gasturbine 100 wird das Stellmittel 16 von einer Schließstellung auf eine geöffnete Stellung überführt, nämlich dann, wenn im Teillastbetrieb die CO-Anteile im Verbrennungsgas nahe an einem Grenzwert sind. Dieser Grenzwert ist insbesondere ein gesetzlicher CO-Emissionsgrenzwert. Gemäß einer weiteren bevorzugten Fahrweise der Gasturbine 100 kann das Stellmittel 16 auch entsprechend des Lastzustandes der Gasturbine 100 geeignet eingestellt werden, um so etwa mehr oder weniger Entnahmeluft aus dem Entnahmeplenum 13 in das Abgabeplenum 14 zu leiten. Hierzu kann das Stellmittel 16 beispielsweise mittels einer Steuer- bzw. Regeleinheit 30 in Wirkverbindung stehen, die an das Stellmittel 16 entsprechende Steuersignale überträgt. Gleichzeitig ist die Steuer- bzw. Regeleinheit 30 derart ausgebildet, auf Grundlage von geeigneten Entscheidungskriterien derartige Steuersignale zu generieren. Derartige Entscheidungskriterien können beispielsweise aus Messwerten erzeugt werden, die mittels nicht weiter gezeigter Messsonden, etwa Temperaturmesssonden im Abgasstrahl der Gasturbine 100, aufgenommen und nach Vergleich mit geeigneten Richtwerten umgesetzt werden.

Vorliegend ist gezeigt, dass die Luftentnahmeöffnung 11 im Bereich der ersten Verdichterstufe angeordnet ist. Dies ist insbesondere deshalb bevorzugt, da diese Entnahmeluft bereits ausreichend komprimiert ist, jedoch noch nicht derart komprimiert wurde, dass ihre Entnahme einen ungünstigen energetischen Verlust bei Betrieb der Gasturbine 100 bewirken würde. Alternative Ausführungsweisen können die Luftentnahmeöffnung 11 auch an anderen Verdichterstufen anordnen bzw. diesen zuordnen, welche insbesondere stärker komprimierte Ansaugluft und damit thermisch wärmere Ansaugluft über die Luftentnahmeöffnung 11 an das Entnahmeplenum 13 abgeben. Aufgrund der höheren Erwärmung dieser Ansaugluft würde der erfindungsgemäße Mischeffekt verstärkt. Jedoch müsste gleichzeitig verhältnismäßig mehr Leistung für den Betrieb des Gasturbinenläufers 3 aufgebracht werden, um den Wirkungsgrad der Gasturbine 100 unverändert zu lassen.

Gemäß einer weiteren nicht näher gezeigten Ausführungsform ist es auch denkbar, dass mehrere Luftentnahmeöffnungen 11 vorgesehen sind, die an unterschiedlichen Orten des Verdichters 1 bei unterschiedlichen zweiten Drücken P2 angeordnet sind. Je nach Öffnungsquerschnitt könnte auch so mehr oder weniger Ansaugluft 10 entnommen werden, um diese einem gemeinsamen oder auch unterschiedlichen Entnahmeplenum 13 zuzuführen.

Demgemäß ist es auch entsprechend einer weiteren nicht gezeigten Ausführungsform denkbar, dass das gezeigte Abgabeplenum 14 durch mehrere Abgabeplena 14 ersetzt ist, die jeweils geeignete Luftabgabeöffnungen 12 aufweisen.

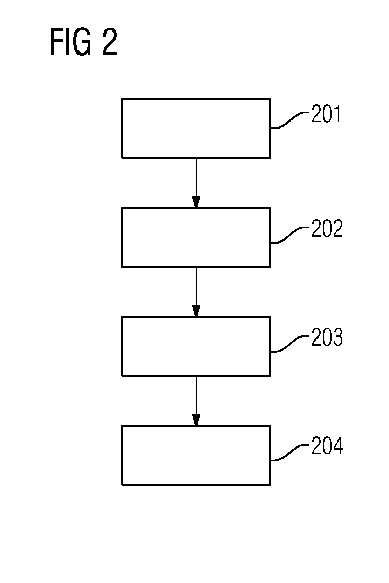

FIG 2 zeigt eine Ausführungsform des erfindungsgemäßen Verfahrens zum Betrieb einer vorab beschriebenen Gasturbine 100 entsprechend einer flussdiagrammatischen Darstellung. Demnach umfasst das Verfahren folgende Schritte:
- Betrieb einer vorab dargestellten Gasturbine 100 in Teillast (erster Verfahrensschritt 201);
- Entnehmen von komprimierter Ansaugluft 10 aus dem Verdichter 1 durch die erste Luftentnahmeöffnung 11 (zweiter Verfahrensschritt 202);
- Leiten der entnommenen Ansaugluft 10 von der Luftentnahmeöffnung 11 zu der Luftabgabeöffnung 12 (dritter Verfahrensschritt 203);
- Abgeben von Ansaugluft 10 aus der Luftabgabeöffnung 12 an die von dem Verdichter 1 angesaugte Luft. (vierter Verfahrensschritt 204).

Weitere Ausführungsformen ergeben sich aus den Unteransprüchen.

## Patentansprüche

1. Gasturbine (100) mit einem Verdichter (1), welcher wenigstens eine zur Ansaugluft (10) gerichtete Luftentnahmeöffnung (11) in einem zweiten Bereich (22) aufweist, der bei einem regulären Betrieb der Gasturbine (100) komprimierte Ansaugluft (10) bei einem zweiten Druck (P2) aufweist, und welche Gasturbine (100) eine stromaufwärts von der Luftentnahmeöffnung (11) in Bezug auf den Strom der Ansaugluft (10) angeordnete und zur Ansaugluft (10) gerichtete Luftabgabeöffnung (12) aufweist, die in einem ersten Bereich (21) vorgesehen ist, welcher bei einem regulären Betrieb der Gasturbine (100) Ansaugluft (10) bei einem ersten Druck (P1) aufweist, wobei der erste Druck (P1) kleiner als der zweite Druck (P2) ist.

2. Gasturbine gemäß Anspruch 1,
**dadurch gekennzeichnet, dass** die Luftabgabeöffnung (12) am Verdichtereintrittsgehäuse (2) vorgesehen ist.

3. Gasturbine gemäß einem der vorhergehenden Ansprüche,
**dadurch gekennzeichnet, dass** die Luftentnahmeöffnung (11) und die Luftabgabeöffnung (12) durch wenigstens eine Leitung (15) fluidtechnisch verbunden sind, die ein Stellmittel (16) aufweist.

4. Gasturbine gemäß Anspruch 4,
**dadurch gekennzeichnet, dass** das Stellmittel (16) mit einer Steuer- bzw. Regeleinheit (30) in Wirkverbindung steht, wobei die Steuer- bzw. Regeleinheit (30) derart ausgebildet ist, dass im Teillastbetrieb der Gasturbine (100) das Stellmittel (16) von einer Schließstellung in eine geöffnete Stellung überführt wird, insbesondere dann, wenn der Teillastbetrieb Betriebsparameter aufweist, die eine CO-Emission anzeigen, die über einem vorbestimmten Grenzwert liegt.

5. Gasturbine gemäß einem der vorhergehenden Ansprüche,
**dadurch gekennzeichnet, dass** die Luftabgabeöffnung (12) als eine Vielzahl an im Verdichtereintrittsgehäuse (2) bzw. in dem Verdichter (1) radial angebrachten Öffnungen ausgebildet ist.

6. Gasturbine gemäß einem der vorhergehenden Ansprüche,
**dadurch gekennzeichnet, dass** die Luftabgabeöffnung (12) eine Anstellung in Bezug auf die Richtung des Stroms der Ansaugluft (10) im ersten Bereich (21) aufweist, insbesondere eine Anstellung derart, dass die abgegebene Luft bereits einen Geschwindigkeitsanteil aufweist, der in Richtung des Ansaugluftstroms im ersten Bereich (21) weist.

7. Gasturbine gemäß einem der vorhergehenden Ansprüche,
**dadurch gekennzeichnet, dass** die Luftentnahmeöffnung (11) im Verdichter (1) als eine im Wesentlichen radial verlaufende Öffnung ausgebildet ist, die insbesondere bei radialem Verlauf nicht unterbrochen ist.

8. Gasturbine gemäß einem der vorhergehenden Ansprüche,
**dadurch gekennzeichnet, dass** die Luftentnahmeöffnung (11) eine Anstellung in Bezug auf die Richtung des Stroms der Ansaugluft (10) im zweiten Bereich (22) aufweist, insbesondere eine Anstellung derart, dass die entnommene Luft bereits einen Geschwindigkeitsanteil aufweist, der in Richtung des Ansaugluftstroms im zweiten Bereich (22) weist.

9. Gasturbine gemäß einem der vorhergehenden Ansprüche,
**dadurch gekennzeichnet, dass** die Gasturbine (100) weiterhin ein Entnahmeplenum (13) aufweist, welches der Luftentnahmeöffnung (11) strömungstechnisch in Bezug auf den entnommenen Luftstrom nachgeschaltet ist.

10. Gasturbine gemäß einem der vorhergehenden Ansprüche,
**dadurch gekennzeichnet, dass** die Gasturbine (100) weiterhin ein Abgabeplenum (14) aufweist, welches der Luftabgabeöffnung (12) strömungstechnisch in Bezug auf den entnommenen Luftstrom vorgeschaltet ist.

11. Verfahren zum Betreiben einer Gasturbine nach einem der vorhergehenden Ansprüche, wobei das Verfahren die folgenden Schritte umfasst:
- Betrieb der Gasturbine (100) in Teillast;
- Entnehmen von komprimierter Ansaugluft (10) aus dem Verdichter (1) durch die erste Luftentnahmeöffnung (11) ;
- Leiten der entnommenen Ansaugluft (10) von der Luftentnahmeöffnung (11) zu der Luftabgabeöffnung (12);
- Abgeben von Ansaugluft (10) aus der Luftabgabeöffnung (12) an die von dem Verdichter (1) angesaugte Luft (10).

12. Verfahren gemäß Anspruch 11,
**dadurch gekennzeichnet, dass** die Menge der von der Luftentnahmeöffnung (11) an die Luftabgabeöffnung (12) geleiteten Ansaugluft (10) durch ein Stellmittel (16) eingestellt werden kann, wobei das Stellmittel (16) in Abhängigkeit eines Betriebsparameters, insbesondere der Abgastemperatur eingestellt wird.
